# DEMANDE DE BREVET EUROPEEN

(11) **EP 1 319 824 A1**
(43) Date de publication de la demande: **18.06.2003**
(21) Numéro de dépôt: 02293021.8
(22) Date de dépôt: 06.12.2002
(51) Int. Cl.: F02M 25/00, F02M 37/22, F01N 3/04, F02M 37/00

(54) **Procédé d'alimentation d'un moteur à combustion interne et dispositif associé**

(30) Priorité: 14.12.2001 FR 0116247
(71) Demandeur: Renault s.a.s., 92100 Boulogne Billancourt (FR)
(72) Inventeur: La désignation de l'inventeur n'a pas encore été déposée

(57) **Abrégé**

Dans un procédé d'alimentation en carburant d'un moteur à combustion interne (2), on réalise simultanément les étapes suivantes : on alimente le moteur (2) en carburant à partir d'un réservoir (6) au moyen d'une pompe d'alimentation (7), le carburant étant filtré entre le réservoir (6) et la pompe (7) par un filtre à carburant (9) en vue de récupérer de l'eau présente dans le carburant, on alimente le moteur (2) en air par l'intermédiaire d'un circuit d'alimentation en air (4) comprenant un filtre à air (13), on évacue les gaz d'échappement en sortie du moteur (2) par l'intermédiaire d'une ligne d'échappement (5) comprenant un filtre de gaz d'échappement (16). En outre, on prélève l'eau récupérée par le filtre à carburant (19) et on introduit l'eau prélevée dans le circuit d'alimentation en air (4) et/ou la ligne d'échappement (6) pour éliminer l'eau récupérée.

## Description

La présente invention concerne un procédé d'alimentation d'un moteur à combustion interne et un dispositif associé, particulièrement adapté pour l'alimentation des moteurs à combustion interne utilisant un carburant du type gazole.

Le gazole comprend de l'eau en faible quantité, selon sa qualité de raffinage. La présence d'eau dans le gazole peut être à l'origine de la défaillance de certains organes d'alimentation en carburant du moteur, par exemple sur les dispositifs d'alimentation utilisant des injecteurs à haute pression. Il est donc recommandé de disposer dans le système d'alimentation du moteur en carburant un filtre à carburant permettant de récupérer en partie l'eau présente dans le carburant, en amont des dispositifs d'injection de carburant.

L'eau récupérée, qui contient des particules de carburant, est polluante et ne peut être simplement évacuée vers l'extérieur. En généràl, on stocke l'eau récupérée lors du filtrage du carburant dans un réservoir adjacent au filtre et comprenant une vis de purge, utilisée lors de l'entretien du véhicule. La purge est effectuée régulièrement, à une fréquence variant selon le réservoir, selon la qualité du carburant et sa teneur moyenne en eau, qui varie selon les pays, ou encore selon les conditions atmosphériques d'utilisation, variant également selon les pays.

On peut également prévoir un réservoir déporté, régulièrement purgé, ou de contenance suffisante pour permettre le stockage de l'eau récupérée dans la vie du véhicule.

Cependant, ces solutions ne sont pas satisfaisantes. En cas de purge du réservoir de stockage, l'immobilisation du véhicule et l'intervention d'un spécialiste sont nécessaires, selon l'emplacement du réservoir. De plus, un contrôle visuel régulier du niveau d'eau décantée dans le réservoir est recommandé, entre les opérations de purge, notamment en raison de l'incertitude de la teneur en eau du carburant utilisé par le conducteur du véhicule. Par ailleurs, les opérations de maintenance, effectuées par un spécialiste, ne sont pas transparentes pour le conducteur, et des alertes de tableau de bord peuvent survenir en cas d'utilisation de gazole à forte teneur en eau. Un oubli de maintenance peut provoquer un trop plein d'un réservoir d'eau récupérée.

L'invention a pour objet un procédé d'alimentation d'un moteur à combustion interne permettant de limiter les opérations de maintenance du circuit d'alimentation en carburant.

L'invention a encore pour objet un procédé d'alimentation d'un moteur à combustion interne permettant une élimination de l'eau récupérée par filtrage du carburant, tout en évitant les problèmes de carburations dus à une teneur en eau importante dans le carburant.

L'invention a également pour objet un dispositif de mise en oeuvre d'un procédé d'alimentation d'un moteur à combustion interne, peu encombrant, et de coût de fabrication faible.

Dans un procédé d'alimentation en carburant d'un moteur à combustion interne, selon un aspect de l'invention, on réalise les étapes suivantes : on alimente le moteur en carburant à partir d'un réservoir au moyen d'une pompe d'alimentation, le carburant étant filtré entre le réservoir et la pompe par un filtre à carburant en vue de récupérer de l'eau présente dans le carburant, on alimente le moteur en air par l'intermédiaire d'un circuit d'alimentation en air comprenant un filtre à air, on évacue les gaz d'échappement en sortie du moteur par l'intermédiaire d'une ligne d'échappement comprenant un filtre de gaz d'échappement, on prélève l'eau récupérée par le filtre à carburant et on introduit l'eau prélevée dans le circuit d'alimentation en air et/ou la ligne d'échappement pour éliminer l'eau récupérée.

Le filtre à carburant permet de filtrer le carburant provenant du réservoir, pour récupérer l'eau présente dans le carburant. Le filtre à carburant est disposé en amont de moyens d'injection de carburant. En effet, la présence d'eau peut endommager les moyens d'injection de carburant, du type injecteur haute pression, ou pompe haute pression et rampe commune. En revanche, la présence d'eau dans une chambre de combustion du moteur est acceptable, dans une certaine mesure, sans perturber le fonctionnement du moteur.

En introduisant l'eau récupérée, chargée en carburant dans le circuit d'alimentation en air du moteur à combustion interne, on introduit l'eau récupérée dans les chambres de combustion du moteur à combustion interne. D'une part, le carburant présent dans l'eau récupérée est brûlé, ce qui permet d'éliminer de carburant tout en récupérant son énergie de combustion. D'autre part, l'eau récupérée est vaporisée lors de la combustion du carburant, et est évacuée en même temps que les gaz d'échappement.

En introduisant l'eau récupérée dans la ligne d'échappement, on utilise la chaleur élevée des gaz d'échappement pour provoquer l'évaporation de l'eau et la combustion du carburant par auto-inflammation.

Selon la quantité d'eau récupérée par le filtre à carburant, et selon les paramètres de fonctionnement du moteur à combustion interne, on peut prévoir de prélever l'eau en vue de sa re-circulation de façon continue, ou par intermittence.

Avantageusement, on prélève l'eau récupérée en fonction d'un niveau bas et/ou d'un niveau haut d'un réservoir intermédiaire associé au filtre carburant. Le réservoir intermédiaire associé au filtre à carburant peut être de faible capacité, l'eau étant prélevée par intermittence, en fonction d'informations de niveau haut ou bas fournies par des capteurs. Les niveaux haut et bas peuvent également être envisagés comme des seuils de sécurité, l'eau étant prélevée dans le réservoir de façon intermittente ou continue. Le réservoir peut être adjacent au filtre ou déporté.

Dans un mode de mise en oeuvre, on introduit l'eau prélevée dans le circuit d'alimentation en air, en amont du filtre à air. L'eau est donc introduite dans le circuit d'alimentation en air. Le filtre à air supporte la présence d'eau. Cette solution permet de filtrer l'eau pour en éliminer les impuretés, avant son introduction, en même temps que les gaz d'admission, dans la chambre de combustion.

Dans un autre mode de mise en oeuvre, on introduit l'eau prélevée dans le circuit d'alimentation en air, en aval du filtre à air. L'eau chargée en carburant est ici encore introduite dans le circuit d'alimentation en air. L'eau n'est pas filtrée, mais on évite une éventuelle altération du filtre à air due à la présence de carburant dans l'eau récupérée.

Dans un autre mode de mise en oeuvre, on introduit l'eau prélevée dans la ligne d'échappement, en amont du filtre de gaz d'échappement. Le dispositif de filtrage est généralement du type pot catalytique, supportant la présence d'eau dans les gaz d'échappement. L'eau récupérée introduite en amont du dispositif de filtrage, c'est-à-dire en sortie du moteur, est vaporisée dans la ligne d'échappement.

Dans un autre mode de mise en oeuvre, on introduit l'eau prélevée dans la ligne d'échappement, en aval du filtre de gaz d'échappement.

L'invention concerne également un dispositif d'alimentation en carburant d'un moteur à combustion interne comprenant un circuit d'alimentation en carburant pourvu d'un réservoir, d'une pompe, et d'un filtre à carburant disposé entre le réservoir et la pompe et permettant de récupérer l'eau présente dans le carburant, un circuit d'alimentation du moteur en air pourvu d'un filtre à air, et une ligne d'échappement pourvue d'un filtre de gaz d'échappement. Le dispositif d'alimentation comprend en outre des moyens de prélèvement de l'eau récupérée par le filtre à carburant disposé sur une sortie du filtre à carburant, et des moyens de circulation de l'eau prélevée entre les moyens de prélèvement et le circuit d'alimentation en air et/ou la ligne d'échappement.

Dans un mode de réalisation, le dispositif d'alimentation comprend une pompe de circulation de l'eau récupérée par le filtre à carburant.

Dans un mode de réalisation, le dispositif d'alimentation comprend une conduite de circulation de l'eau prélevée, reliée à une extrémité à la sortie de la pompe et à l'autre extrémité au circuit d'alimentation en air, en amont du filtre à air.

Dans un mode de réalisation, le dispositif d'alimentation comprend une conduite de circulation de l'eau prélevée, reliée à une extrémité à la sortie de la pompe et à l'autre extrémité au circuit d'alimentation en air, en aval du filtre à air.

Dans un mode de réalisation, le dispositif d'alimentation comprend une conduite de circulation de l'eau prélevée, reliée à une extrémité à la sortie de la pompe et à l'autre extrémité à la ligne d'échappement, en amont du filtre de gaz d'échappement.

Dans un mode de réalisation, le dispositif d'alimentation comprend une conduite de circulation de l'eau prélevée, reliée à une extrémité à la sortie de la pompe et à l'autre extrémité à la ligne d'échappement, en aval du filtre de gaz d'échappement.

L'invention concerne encore un véhicule automobile comprenant un moteur à combustion interne alimenté à partir d'un réservoir de carburant et un dispositif d'alimentation selon un aspect de l'invention.

La présente invention et ses avantages seront mieux compris à l'étude de la description détaillée de modes de réalisations pris à titre d'exemple non-limitatifs et illustrée par les dessins annexés, sur lesquels :
- la figure 1 illustre schématiquement un dispositif de mise en ouvre du procédé d'alimentation d'un moteur à combustion interne selon un aspect de l'invention ;
- la figure 2 illustre une variante du dispositif selon la figure 1 ;
- la figure 3 illustre une seconde variante du dispositif selon la figure 1 ; et
- la figure 4 illustre une troisième variante du dispositif selon la figure 1.

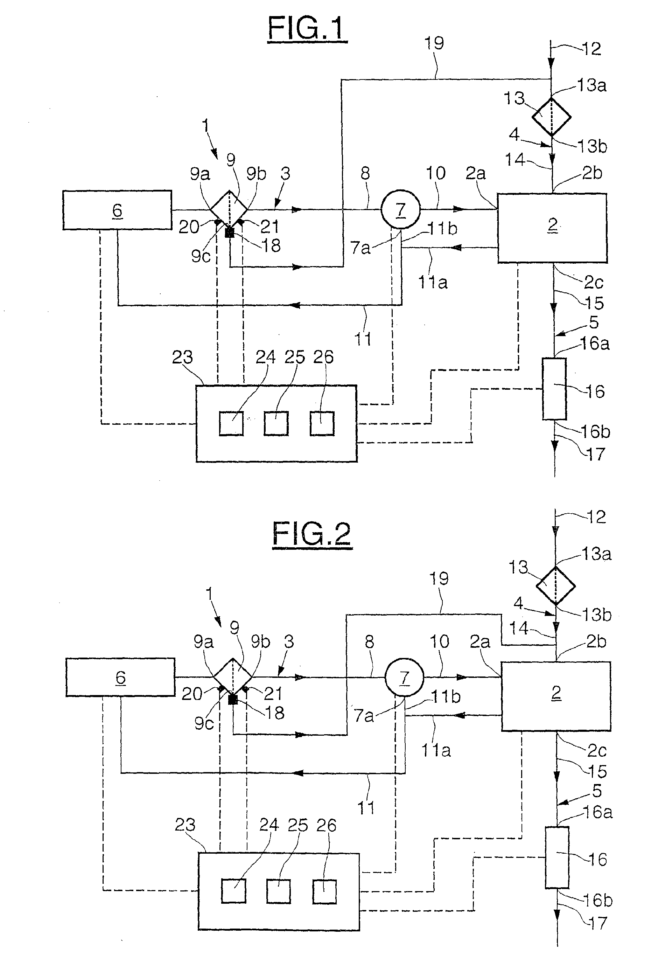

Sur la figure 1, un dispositif d'alimentation 1 d'un moteur à combustion interne 2 comprend un circuit d'alimentation en carburant 3, un circuit d'alimentation en air 4 et une ligne d'échappement 5.

Le circuit d'alimentation en carburant 3 comprend un réservoir de carburant 6, alimentant une pompe d'alimentation à haute pression 7 par l'intermédiaire d'une conduite 8 sur laquelle est disposé un filtre à carburant 9 pourvu d'une entrée 9a et d'une sortie 9b de carburant. La pompe à haute pression 7 alimente une entrée de carburant 2a du moteur à combustion interne 2 en carburant sous haute pression, par l'intermédiaire d'une conduite 10. Le moteur 2 comprend des moyens d'injection du carburant dans une chambre de combustion, non représentés sur la figure 1.

Le filtre à carburant 9 permet d'éliminer des impuretés présentes dans le carburant, ainsi que de l'eau présente dans le carburant. L'eau est récupérée, par exemple par gravité, dans un réservoir intermédiaire 9c disposé au fond du filtre à carburant 9.

Une conduite de retour de carburant 11 comprend une première entrée 11a reliée à une sortie de retour 2b du moteur à combustion interne et une seconde entrée 11b reliée à une sortie de retour 7a de la pompe à haute pression 7. La conduite de retour 11 débouche dans le réservoir 6. La conduite de retour 11 permet un retour du surplus de carburant alimentant le pompe haute pression 7 et le moteur à combustion interne 2. La récupération de ce surplus de carburant permet d'éviter de brûler une trop grande quantité de carburant, ou de produire trop de particules imbrûlées, et ce afin de limiter la consommation en carburant et la production de gaz polluants.

Le circuit d'alimentation en air 4 comprend une conduite d'admission amont 12 débouchant dans une entrée 13a d'un filtre à air 13, et une conduite d'amission aval 14 située entre une sortie 13b du filtre à air 13 et une entrée d'air 2b du moteur.

Le filtre à air 13 permet d'éliminer les impuretés présentes dans l'air d'admission. Le filtre à air 13 est prévu pour supporter la présence d'eau dans l'air d'admission, notamment en cas d'utilisation d'un véhicule automobile équipé du dispositif d'alimentation du moteur à combustion interne 2 par temps de pluie.

Le circuit d'échappement 5 comprend une conduite d'échappement amont 15 disposée entre une sortie de gaz d'échappement 2c du moteur à combustion interne 2 et une entrée 16a d'un filtre de gaz d'échappement 16, par exemple un pot catalytique ou un filtre à particules comprenant une phase catalytique. Une conduite d'échappement aval 17 est disposée en sortie d'une sortie 16b du filtre de gaz d'échappement 16.

Une pompe d'évacuation 18 est apte à prélever l'eau contenue dans le réservoir intermédiaire 9c, et à l'injecter dans la conduite d'admission amont 12, par l'intermédiaire d'une conduite d'évacuation 19 disposée entre une sortie de la pompe d'évacuation 18 et la conduite d'admission amont 12.

Sur les figures 2 à 4, illustrant des variantes du dispositif d'alimentation 1, les références aux éléments semblables ont été reprises.

La figure 2 illustre une variante du dispositif d'alimentation 1 dans laquelle la conduite d'évacuation 19 débouche dans la conduite d'admission aval 14. Le fonctionnement du dispositif est similaire à celui illustré par le figure 1.

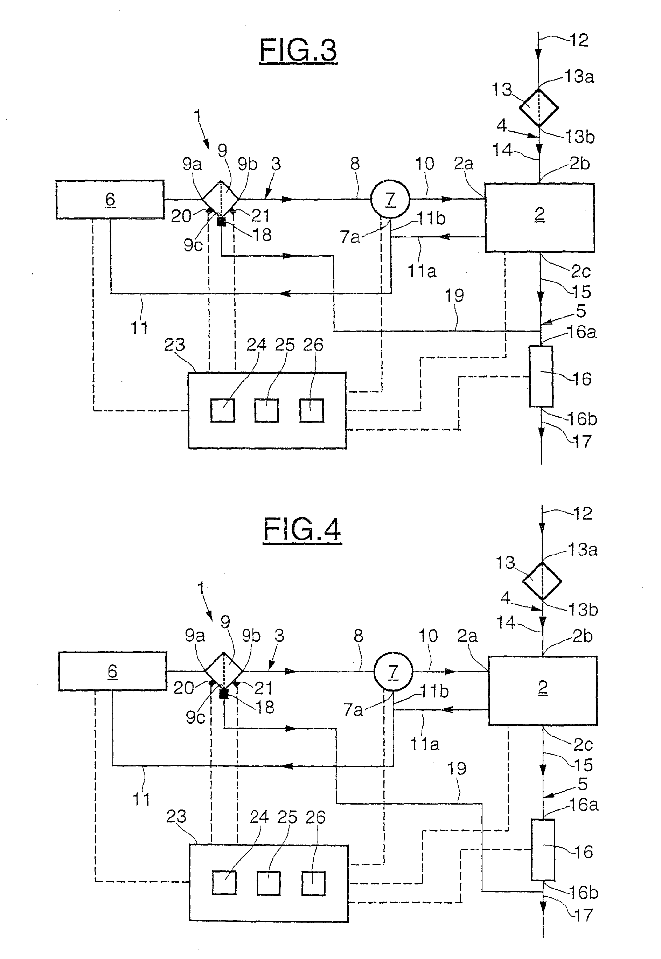

La figure 3 illustre une variante du dispositif d'alimentation 1 dans laquelle la conduite d'évacuation 19 débouche dans la conduite d'échappement amont 15. L'eau est évaporée directement dans les gaz d'échappement qui sont portés à température élevée.

Enfin, la figure 4 illustre une variante du dispositif d'alimentation 1 dans laquelle la conduite d'évacuation 19 débouche dans la conduite d'échappement aval 17. Cette variante présente l'avantage, par rapport à la variante précédente, que la pression et la température dans la conduite d'échappement aval 17 sont moins importante que dans la conduite d'échappement amont 15. La pression nécessaire à l'injection de l'eau prélevée dans la conduite d'échappement aval est donc moins élevée.

Dans tous les modes de réalisations illustrés, il convient de commander la pompe d'évacuation 18 de manière à ne pas modifier les principaux paramètres de fonctionnement du moteur et du pot catalytique.

Dans le cas des modes de réalisations illustrés par les figures 1 et 2, il convient de ne pas perturber le bon fonctionnement du moteur à combustion interne 2. Dans le cas du mode de réalisation de la figure 3, il convient de ne pas perturber le fonctionnement du pot catalytique, notamment parce que le carburant présent dans l'eau récupérée peut provoquer des micro-explosions dommageables pour le pot catalytique.

Comme représentés sur les figures 1 à 4, on prévoit des capteurs 20, 21 de niveau haut ou bas de l'eau récupérée dans le réservoir intermédiaire 9c. Les informations de niveau haut ou bas en provenance des capteurs 20, 21 peuvent être utilisées pour commander la pompe d'évacuation 18 : dès qu'un niveau haut est atteint, la pompe d'évacuation 18 est commandée pour prélever et évacuer l'eau récupérée, avec un débit adapté au fonctionnement du moteur 2 ou du pot catalytique 16, jusqu'à atteindre un niveau bas. Les informations de niveaux haut ou bas en provenance des capteurs 20, 21 peuvent être utilisées pour déterminer des seuils de commande de la pompe d'évacuation 18 : la pompe d'évacuation 18 est commandée pour prélever et évacuer l'eau récupérée régulièrement avec un débit adapté pour le bon fonctionnement du moteur 2 et du pot catalytique 16, un arrêt de la pompe 18 étant commandé en cas d'information de niveau bas, et une évacuation de l'eau plus importante étant commandée en cas de niveau haut.

Bien entendu, d'autres modes de commande et de mise en oeuvre de la pompe 18 peuvent convenir, qui permettent d'évacuer l'eau récupérée à l'aide du filtre à carburant 9, et de maintenir le niveau d'eau dans le réservoir intermédiaire 9c à un niveau intermédiaire entre un niveau haut et un niveau bas. Par exemple on peut également prévoir de ne faire fonctionner la pompe d'évacuation que dans certains modes de fonctionnement du moteur 2, plus appropriés à l'évacuation de l'eau, et dépendant de la charge et de la vitesse de rotation du moteur.

On prévoit des moyens de commande de la pompe d'évacuation 18. Pour ne pas perturber le fonctionnement du moteur 2, on prévoit encore que ces moyens de commande sont couplés à ceux du moteur 2. Un moyen de commande 23 comprend un moyen mémoire 24 où sont stockés des programmes de mise en oeuvre du dispositif d'alimentation lorsqu'ils sont exécutés par un microprocesseur 25 du moyen de commande, en tenant compte d'informations récupéré par une unité de traitement 26, en provenance de capteurs non représentés, et disposés de façon connue sur le moteur 2, sur un poste de commande du moteur 2, sur la ligne d'échappement 5, le circuit d'alimentation en air 4, le circuit d'alimentation en carburant 5, et en tous endroit permettant de connaître des informations utiles à la mise en oeuvre d'un moteur à combustion interne.

L'unité de traitement reçoit ici les informations en provenance des capteurs 20 et 21. Le moyen de commande permet de commander entre autres le moteur 2, la pompe haute pression 7, et la pompe d'évacuation 18.

L'évacuation de l'eau par la pompe d'évacuation 9 permet de n'utiliser qu'un réservoir de faible capacité, et de faible encombrement, contrairement à un réservoir qui serait prévu pour stocker l'eau sur de longues périodes, entre deux interventions extérieures de maintenance. Dans le mode de réalisation illustré, le réservoir intermédiaire est adjacent au filtre, et peut être directement formé dans le fond du filtre, pour réduire l'encombrement et les coups de fabrication. On peut néanmoins prévoir un réservoir intermédiaire déporté, sans modifier le fonctionnement du dispositif d'alimentation 1.

Les figures 1 à 4 représentent quatre variantes différentes du dispositif d'alimentation. Bien entendu, des variantes peuvent être réalisées pas association des quatre variantes de base, sans sortir du cadre de l'invention.

Grâce à l'invention, on peut évacuer l'eau récupérée par filtrage du carburant en sortie de réservoir, sans provoquer de pollution, sans nécessiter d'arrêt du véhicule ou d'intervention de maintenance par un spécialiste. En outre, le carburant présent dans l'eau récupérée peut être brûlé, l'énergie de combustion étant récupérée. L'évacuation de l'eau se fait sans perturber le bon fonctionnement du moteur, et en préservant les moyens d'injection de carburant dans le moteur.

## Revendications

1. Procédé d'alimentation en carburant d'un moteur à combustion interne (2) dans lequel on alimente le moteur (2) en carburant à partir d'un réservoir (6) au moyen d'une pompe d'alimentation (7), le carburant étant filtré entre le réservoir (6) et la pompe (7) par un filtre à carburant (9) en vue de récupérer de l'eau présente dans le carburant, on alimente le moteur (2) en air par l'intermédiaire d'un circuit d'alimentation en air (4) comprenant un filtre à air (13), on évacue les gaz d'échappement en sortie du moteur (2) par l'intermédiaire d'une ligne d'échappement (5) comprenant un filtre de gaz d'échappement (16), **caractérisé par le fait qu'**en outre on prélève l'eau récupérée par le filtre à carburant (9) et on introduit l'eau prélevée dans le circuit d'alimentation en air (4) et/ou la ligne d'échappement (5) pour éliminer l'eau récupérée.

2. Procédé selon la revendication 1, **caractérisé par le fait que** l'on prélève l'eau récupérée de façon continue ou par intermittence.

3. Procédé selon l'une quelconque des revendications 1 ou 2, **caractérisé par le fait que** l'on prélève l'eau récupérée en fonction d'un niveau bas et/ou d'un niveau haut d'un réservoir intermédiaire (9c) associé au filtre carburant (9).

4. Procédé selon l'une quelconque des revendications précédentes, **caractérisé par le fait que** l'on introduit l'eau prélevée dans le circuit d'alimentation en air, en amont du filtre à air (13).

5. Procédé selon l'une quelconque des revendications précédentes, **caractérisé par le fait que** l'on introduit l'eau prélevée dans le circuit d'alimentation en air, en aval du filtre à air (13).

6. Procédé selon l'une quelconque des revendications précédentes, **caractérisé par le fait que** l'on introduit l'eau prélevée dans la ligne d'échappement, en amont du filtre de gaz d'échappement (16).

7. Procédé selon l'une quelconque des revendications précédentes, **caractérisé par le fait que** l'on introduit l'eau prélevée dans la ligne d'échappement, en aval du filtre de gaz d'échappement (16).

8. Dispositif d'alimentation (1) en carburant d'un moteur à combustion interne (2) comprenant un circuit d'alimentation en carburant (3) pourvu d'un réservoir (6), d'une pompe d'alimentation (7), et d'un filtre à carburant (9) disposé entre le réservoir (6) et la pompe (7) et permettant de récupérer l'eau présente dans le carburant, un circuit d'alimentation en air (4) du moteur (2) pourvu d'un filtre à air (13), et une ligne d'échappement (5) pourvue d'un filtre de gaz d'échappement (16), **caractérisé par le fait qu'**il comprend en outre des moyens de prélèvement (18) de l'eau récupérée par le filtre à carburant (9) disposé sur une sortie du filtre à carburant, et des moyens de circulation (19) de l'eau prélevée entre les moyens de prélèvement et le circuit d'alimentation en air (4) et/ou la ligne d'échappement (5).

9. Dispositif selon la revendication 8, **caractérisé par le fait qu'**il comprend une pompe d'évacuation (18) de l'eau récupérée par le filtre à carburant (9).

10. Dispositif selon la revendication 9, **caractérisé par le fait qu'**il comprend une conduite de circulation (19) de l'eau prélevée, reliée à une extrémité à la sortie de la pompe d'évacuation (18) et à l'autre extrémité au circuit d'alimentation en air (4), en amont du filtre à air (9).

11. Dispositif selon l'une quelconque des revendications 9 ou 10, **caractérisé par le fait qu'**il comprend une conduite de circulation (19) de l'eau prélevée, reliée à une extrémité à la sortie de la pompe d'évacuation (18) et à l'autre extrémité au circuit d'alimentation en air (4), en aval du filtre à air (9).

12. Dispositif selon l'une quelconque des revendications 9 à 11, **caractérisé par le fait qu'**il comprend une conduite de circulation (19) de l'eau prélevée, reliée à une extrémité à la sortie de la pompe d'évacuation (18) et à l'autre extrémité à la ligne d'échappement (5), en amont du filtre de gaz d'échappement (16).

13. Dispositif selon l'une quelconque des revendications 9 à 12, **caractérisé par le fait qu'**il comprend une conduite de circulation (19) de l'eau prélevée, reliée à une extrémité à la sortie de la pompe d'évacuation (18) et à l'autre extrémité à la ligne d'échappement (5), en aval du filtre de gaz d'échappement (16).

14. Véhicule automobile comprenant un moteur à combustion interne alimenté à partir un réservoir de carburant, **caractérisé par le fait qu'**il comprend un dispositif d'alimentation selon l'une quelconque des revendications 8 à 13.
